# EUROPÄISCHE PATENTANMELDUNG

(11) **EP 0 942 509 A2**
(43) Veröffentlichungstag der Anmeldung: **15.09.1999**
(21) Anmeldenummer: 98123932.0
(22) Anmeldetag: 16.12.1998
(51) Int. Cl.: H02J 1/14

(54) **Redundanzstrukturadaptive Stromzuführung für Kommunikationsbaugruppen**

(30) Priorität: 12.03.1998 DE 19810830
(71) Anmelder: SIEMENS AKTIENGESELLSCHAFT, 80333 München (DE)
(72) Erfinder: Huber, Siegfried Dr., 85084 Reichertshofen (DE)

(57) **Zusammenfassung**

Eine Stromversorgungseinrichtung für mehrere in einem gemeinsamen Gehäuse untergebrachte Kommunikationsbaugruppen weist mehrere Steckplätze für die Kommunikationsbaugruppen mit jeweils zwei Anschlußkontakten (3, 3') sowie mehrere Stromversorgungsanschlüsse (2) zum Anschluß an mehrere externe Stromquellen auf. Die Stromversorgungsanschlüsse (2) sind so mit den Anschlußkontakten (3, 3') der Steckplätze verdrahtet, daß allein durch Auswahl von an den Stromversorgungsanschlüssen (2) angeschlossenen externen Stromquellen a) jede der Kommunikationsbaugruppen mit zwei verschiedenen der externen Stromquellen verbindbar ist, und b) jede der Kommunikationsbaugruppen mit einer externen Stromquelle, jedoch ein Paar von zwei Kommunikationsbaugruppen mit zwei verschiedenen externen Stromquellen verbindbar ist. So können mit einer gemeinsamen Stromversorgungseinrichtung, die beispielsweise an der Rückwand des Gehäuses angeordnet ist, durch einfaches Umstecken der Stromversorgungsanschlüsse paarweise vorhandene 1+1-redundante Kommunikationsbaugruppen mit nur jeweils einer verschiedenen Stromquelle verbunden und andererseits 1:n-redundante oder nicht redundante Baugruppen gleichzeitig mit zwei verschiedenen Stromquellen verbunden werden.

## Beschreibung

Kommunikationseinrichtungen wie beispielsweise Vermittlungsstellen oder Multiplexer-Vorrichtungen unterliegen hohen Anforderungen an die Verfügbarkeit, damit Ausfälle von Kommunikationsnetzen mit ihren weitreichenden Folgen (z. B. Ausfall von Notrufen) verhindert werden. Deshalb werden in Kommunikationseinrichtungen verwendete Schaltungsanordnungen, im folgenden als Kommunikationsbaugruppen bezeichnet, in redundanter Anordnung betrieben. Dabei werden entsprechend den spezifischen Anforderungen verschiedene Redundanzstrukturen verwendet. Für sehr hohe Zuverlässigkeitsanforderungen wird die sogenannte "1+1-Redundanz" eingesetzt, bei der jeweils einer "Working"-Baugruppe eine "Protection"-Baugruppe zugeordnet ist. Fällt die "Working"-Baugruppe aus, so kann die gleiche Aufgabe sofort von der identischen "Protection"-Baugruppe übernommen werden. Für geringere Zuverlässigkeitsanforderungen wird häufig die 1:N-Redundanzstruktur eingesetzt, bei der N "Working"-Baugruppen eine redundante bzw. "Protection"-Baugruppe zugeordnet wird. Sind die Zuverlässigkeitsanforderungen geringer oder ist eine Absicherung anderweitig vorgesehen, können Baugruppen auch nicht redundant betrieben werden.

Die Stromversorgung für 1+1-redundante Baugruppen sollte für die "Working"- und "Protection"-Baugruppen jeweils getrennte Stromzuführungen besitzen, die nach Möglichkeit auch galvanisch vollständig voneinander getrennt sind, um bei eventuellen Ausfällen oder Defekten einer Stromzuführung die Redundanz nicht durch Rückwirkungen über die Stromversorgung zu gefährden. Bei einer 1:N-Redundanzstruktur bzw. bei mehreren nicht redundanten Baugruppen ist es jedoch vorteilhaft, daß jede Baugruppe zugleich von zwei Stromkreisen, die natürlich dann galvanisch verkoppelt sind, versorgt werden soll, um durch Ausfälle eines Stromkreises nicht mehrere Baugruppen gleichzeitig in einen Defektzustand zu bringen, da ja zur Aufrechterhaltung des Betriebes nur eine "Protection"-Baugruppe bzw. überhaupt keine Redundanz zur Verfügung steht. Durch die Stromversorgung mit zwei getrennten Stromzuführungen für jede 1:N-redundante oder nicht redundante Baugruppe kann so die Wahrscheinlichkeit eines Ausfalls durch einen Fehler in der Stromzuführung minimiert werden.

Verschieden Baugruppen, beispielsweise Interface-Baugruppen eines Vermittlungsknotens, sind häufig in einem gemeinsamen Gehäuse an Steckplätzen angebracht, die auch die Anschlußkontakte zur Stromversorgung der Baugruppen aufweisen. Die verschiedenen Redundanzstrukturen der Baugruppen erfordern somit verschiedene Stromversorgungskonzepte der Anschlußkontakte der Steckplätze. Für Baugruppen verschiedener Redundanzauslegung sind somit unterschiedliche Gehäuse oder Baugruppenträger oder zumindest unterschiedliche Gehäuserückwände, die die Stromversorgung tragen, erforderlich. Dadurch sind die Baugruppengehäuse teurer in der Herstellung und weniger flexibel einsetzbar.

Der Erfindung liegt daher die Aufgabe zugrunde, eine Stromversorgungseinrichtung für mehrere in einem gemeinsamen Gehäuse untergebrachte Kommunikationsbaugruppen vorzuschlagen, die für unterschiedliche Redundanzstrukturen der Kommunikationsbaugruppen geeignet ist.

Gelöst wird die Aufgabe durch eine Stromversorgungseinrichtung, die mehrere Steckplätze für die Kommunikationsbaugruppen mit jeweils zwei Anschlußkontakten und mehrere Stromversorgungsanschlüsse zum Anschluß an mehrere externe Stromquellen aufweist, wobei die Stromversorgungsanschlüsse so mit den Anschlußkontakten der Steckplätze verdrahtet sind, daß durch die Auswahl von an den Stromversorgungsanschlüssen angeschlossenen externen Stromquellen a) jede der Kommunikationsbaugruppen mit zwei verschiedenen der externen Stromquellen verbindbar ist, und b) jede der Kommunikationsbaugruppen mit nur einer externen Stromquelle, jedoch jeweils ein Paar von zwei Kommunikationsbaugruppen mit zwei verschiedenen der externen Stromquellen verbindbar ist.

Somit kann durch einfaches Umstecken der Stromversorgungsanschlüsse zu externen Stromquellen entweder eine Stromversorgung jeder Kommunikationsbaugruppe gemäß Fall a), die für 1:N-Redundanz oder keine Redundanz geeignet ist, oder eine paarweise unterschiedliche Versorgung mit jeweils einer Stromquelle gemäß Fall b) realisiert werden, die im Falle von 1+1-Redundanz geeignet ist. Somit kann ein Baugruppengehäuse mit einem einzigen Rückwandtyp für Baugruppen verschiedener Redundanzstruktur verwendet werden. Die Stromversorgung ist den jeweiligen Erfordernissen entsprechend durch einfaches Umstecken der Stromversorgungsanschlusse anpaßbar.

Vorzugsweise kann die Stromversorgungseinrichtung 4 Stromversorgungsanschlüsse für externe Stromquellen aufweisen. Diese sind vorzugsweise als Steckverbindungen ausgebildet.

Vorzugsweise sind die Stromzuführungen für die beiden Kommunikationsbaugruppen eines Paares im Fall b) galvanisch entkoppelt.

Im Fall a) sind die verschiedenen Stromzuführungen einer Kommunikationsbaugruppe vorzugsweise durch Dioden entkoppelt. Die Dioden können an dem Steckplatz oder der Kommunikationsbaugruppe selbst angeordnet sein.

Die Strom-Rückleitung aller Kommunikationsbaugruppen erfolgt vorzugsweise gemeinsam über Masse.

Die Kommunikationsbaugruppen können beispielsweise Interface-Baugruppen sein. Zusätzlich können Steckplätze für Koppelfeld-Baugruppen vorgesehen sein. Gemäß einem bevorzugten Ausführungsbeispiel sind die Steckplätze für Koppelfeld-Baugruppen in der Mitte des Gehäuses und Steckplätze für Interface-Baugruppen beiderseits der Steckplätze für die Koppelfeld-Baugruppen angeordnet. Insgesamt sind vorzugsweise sechs Stromversorgungsanschlüsse vorgesehen, wobei die Stromversorgungsart gemäß der gewählten Redundanzstruktur für die auf jeder Seite angeordneten Interface-Baugruppen separat zwischen den Alternativen a) und b) gewählt werden kann. Dadurch können beispielsweise auf der einen Seite 1+1-redundante Interface-Baugruppen und auf der anderen Seite 1:N-redundante Baugruppen eingesetzt werden.

Bevorzugte Ausführungsbeispiele der erfindungsgemäßen Stromversorgungseinrichtung werden im folgenden unter Bezugnahme auf die beiliegende Zeichnung beschrieben, in der
Fig. 1 ein Ausführungsbeispiel der erfindungsgemäßen Stromversorgungseinrichtung mit einer ersten beispielhaften Anordnung von Stromzuführungen zeigt;
Fig. 2 das Ausführungsbeispiel von Fig. 1 mit einer zweiten Anordnung von Stromzuführungen zeigt;
Fig. 3 das Ausführungsbeispiel von Fig. 1 mit einer dritten Anordnung von Stromzuführungen zeigt; und
Fig. 4 schematisch die Stromzuführung an einer Interface-Baugruppe zeigt.

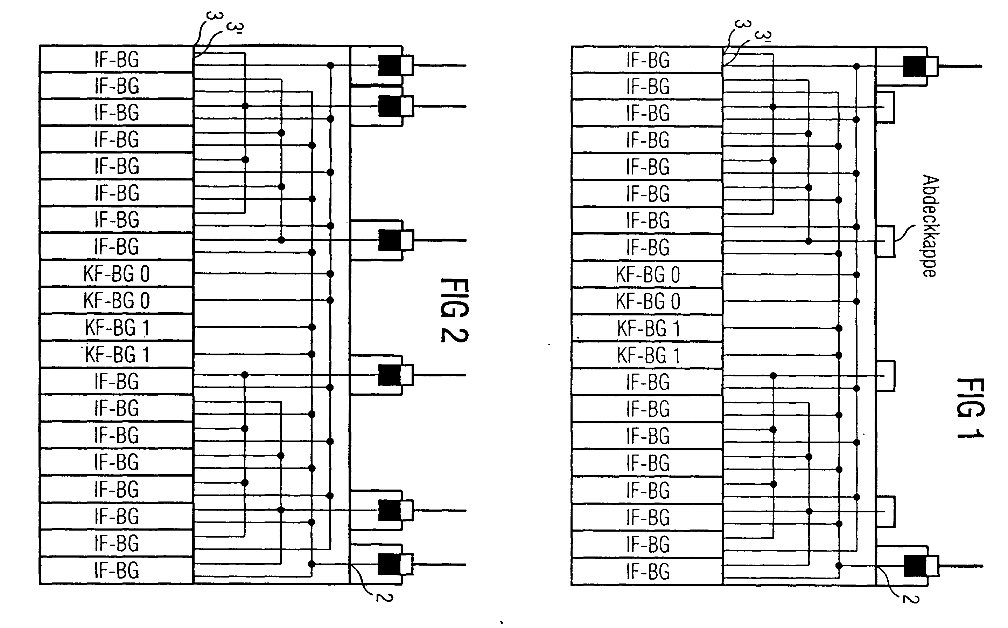

Fig. 1 zeigt schematisch ein bevorzugtes Ausführungsbeispiel einer Stromversorgungseinrichtung für mehrere in einem gemeinsamen Gehäuse untergebrachte Kommunikationsbaugruppen, welche Stromversorgungseinrichtung 1 in der Rückwand des Gehäuses oder Baugruppenträgers angeordnet ist. Im gezeigten Ausführungsbeispiel sind in der Mitte vier Steckplätze für Koppelfeldbaugruppen (KF-BG0 und KF-BG1) angeordnet, die 1+1-Redundanz aufweisen. Beidseits der Steckplätze für die Koppelfeldbaugruppen sind Steckplätze für Interface-Baugruppen (IF-BG) angeordnet. Die gezeigte Anordnung der Steckplätze und der Baugruppen ist bevorzugt, da so möglichst kurze Wegstrecken der Datenleitungen ermöglicht werden. Die Erfindung ist jedoch nicht auf eine spezifische Anzahl oder Anordnung der Kommunikationsbaugruppen oder ihrer Steckplätze beschränkt.

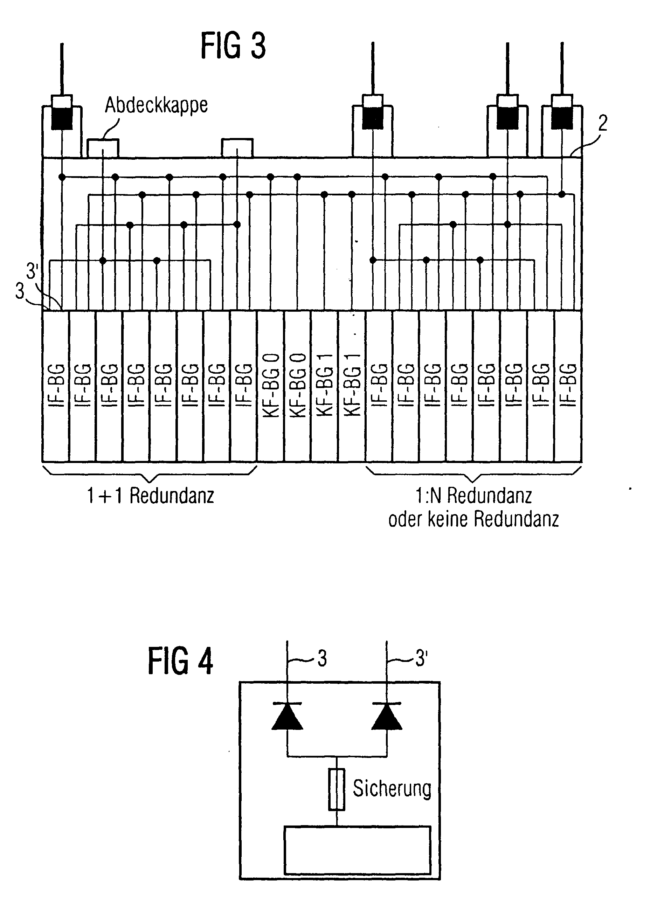

Jeder Steckplatz für eine Interface-Baugruppe IF-BG weist zwei Anschlußkontakte 3, 3' auf. Wie in Fig. 4 gezeigt ist, sind die beiden Kontakte durch Dioden entkoppelt. Die Dioden können, wie in Fig. 4 schematisch dargestellt, in der Interface-Baugruppe angeordnet sein. Es ist jedoch auch denkbar, die Dioden in der Gehäuserückwand anzuordnen.

Die beiden Anschlußkontakte 3, 3' jedes Steckplatzes der Interface-Baugruppen sind mit zwei verschiedenen der in diesem Ausführungsbeispiel insgesamt sechs Stromversorgungsanschlüsse 2 zur Verbindung mit externen Stromquellen verbunden. Mit den gezeigten sechs Stromversorgungsanschlüssen 2 lassen sich, wie später erläutert wird, die beiden Interface-Baugruppensätze links und rechts der Koppelfeldbaugruppen separat verschalten. Für den Aufbau der erfindungsgemäßen Stromversorgungseinrichtung genügen jedoch auch insgesamt vier Stromversorgungsanschlüsse. Wie in Fig. 1 dargestellt ist, ist die erste Interface-Baugruppe ganz links mit den beiden auf der linken Seite angeordneten Stromversorgungsanschlüssen 2 verbunden. Die nächste Interface-Baugruppe ist mit dem dritten Stromversorgungsanschluß von links und dem Stromversorgungsanschluß ganz rechts verbunden. Die Verdrahtung der dritten Interface-Baugruppe entspricht der ersten und der vierten Interface-Baugruppe der zweiten. Verbindet man, wie in Fig. 1 gezeigt ist, die beiden äußeren Stromversorgungsanschlüsse zwei jeweils mit einer Stromquelle und läßt die anderen Anschlüsse offen bzw. deckt sie wie schematisch dargestellt mit einer Abdeckkappe ab, so wird jede der Interface-Baugruppen von jeweils einer Stromquelle versorgt, wobei die Stromversorgungen galvanisch voneinander getrennt sind. Ordnet man nun in jeweils benachbarte Steckplätze Paare redundanter Interface-Baugruppen an, so entspricht die Stromzuführung genau der für die 1+1-Redundanzstruktur optimalen Anordnung. Jede der redundanten Baugruppen ist mit nur einer Stromzuführung verbunden, wobei die beiden Baugruppen eines redundanten Paares mit verschiedenen, galvanisch entkoppelten Stromzuführungen versorgt werden.

In Fig. 2 ist eine Stromzuführungsanordnung gezeigt, die einer 1:N-Redundanzstruktur bzw. einer nicht redundanten Redundanzstruktur angepaßt ist. Jede der Interface-Baugruppen ist über die Stromversorgungsanschlüsse 2 mit zwei verschiedenen Stromquellen verbunden, wobei die beiden Stromzuführungen, wie in Fig. 4 gezeigt ist, durch Dioden voneinander entkoppelt sind. Fällt somit eine Stromquelle aus, kann die Baugruppe durch die andere angeschlossene Stromversorgung weiterhin versorgt werden. Es sei erwähnt, daß die Koppelfeld-Baugruppen in der Mitte des Gehäuses immer 1+1-redundant ausgelegt sind und jeweils über einen Anschlußkontakt mit einem der äußeren Stromversorgungsanschlüsse 2 verbunden sind.

Fig. 3 zeigt eine Anordnung, bei der die Interface-Baugruppen auf der linken Seite wie in Fig. 1 für 1+1-redundante Baugruppen mit jeweils einer Stromquelle verbunden sind. Die auf der rechten Seite des Baugruppenträgers angeordneten 1:N-redundanten oder nicht redundanten Interface-Baugruppen sind entsprechend der in Fig. 2 gezeigten Anordnung mit jeweils zwei verschiedenen Stromquellen verbunden.

So läßt sich mit der erfindungsgemäßen Stromversorgungseinrichtung mit einer einzigen Rückwand durch einfaches Umstecken der Stecker an den Anschlüssen 2 die Stromzuführung der jeweils gewählten Redundanzstruktur anpassen. Sowohl für Baugruppen in 1+1-Redundanz als auch für Baugruppen mit 1:N-Redundanz oder ohne Redundanz sowie für eine Kombination beider Redundanzstrukturen läßt sich daher die gleiche Stromversorgungseinrichtung und somit das gleiche Gehäuse einschließlich Rückwand verwenden. Das Baugruppengehäuse ist dadurch sehr flexibel einsetzbar.

## Patentansprüche

1. Stromversorgungseinrichtung für mehrere in einem gemeinsamen Gehäuse untergebrachte Kommunikationsbaugruppen, aufweisend
- mehrere Steckplätze für die Kommunikationsbaugruppen mit jeweils 2 Anschlußkontakten (3, 3'),
- mehrere Stromversorgungsanschlüsse (2) zum Anschluß an mehrere externe Stromquellen,
wobei die Stromversorgungsanschlüsse (2) so mit den Anschlußkontakten (3, 3') der Steckplätze verdrahtet sind, daß durch Auswahl von an den Stromversorgungsanschlüssen (2) angeschlossenen externen Stromquellen
a) jede der Kommunikationsbaugruppen mit zwei verschiedenen der externen Stromquellen verbindbar ist, und
b) jede der Kommunikationsbaugruppen mit nur einer externen Stromquelle, jedoch jeweils ein Paar von zwei Kommunikationsbaugruppen mit zwei verschiedenen der externen Stromquellen verbindbar ist.

2. Stromversorgungseinrichtung gemäß Anspruch 1,
dadurch gekennzeichnet,
daß vier externe Stromversorgungsanschlüsse (2) vorgesehen sind.

3. Stromversorgungseinrichtung gemäß Anspruch 1 oder 2,
dadurch gekennzeichnet,
daß die Stromversorgungsanschlüsse (2) als lösbare Steckverbindungen ausgebildet sind.

4. Stromversorgungseinrichtung gemäß einem der Ansprüche 1-3, dadurch gekennzeichnet,
daß die Stromzuführungen zu den beiden Kommunikationsbaugruppen eines Paares im Fall b) von Anspruch 1 galvanisch entkoppelt sind.

5. Stromversorgungseinrichtung gemäß einem der Ansprüche 1-4,
dadurch gekennzeichnet,
daß die zwei verschiedenen Stromzuführungen einer Kommunikationsbaugruppe im Fall a) von Anspruch 1 durch Dioden entkoppelt sind.

6. Stromversorgungseinrichtung gemäß einem der Ansprüche 1-5, dadurch gekennzeichnet,
daß die Strom-Rückleitung aller Kommunikationsbaugruppen gemeinsam über Masse erfolgt.

7. Stromversorgungseinrichtung gemäß einem der Ansprüche 1-6, dadurch gekennzeichnet,
daß jeweils ein Paar im Fall b) von Anspruch 1 mit verschiedenen externen Stromquellen verbundener Kommunikatiosnbaugruppen ein Paar redundanter Baugruppen zur Ausführung derselben Aufgabe ist.

8. Stromversorgungseinrichtung gemäß einem der Ansprüche 1-7, dadurch gekennzeichnet,
daß die Kommunikationsbaugruppen Interface-Baugruppen sind.

9. Stromversorgungseinrichtung gemäß Anspruch 8,
gekennzeichnet durch
im gleichen Gehäuse angeordnete Steckplätze für Koppelfeld-Baugruppen.

10. Stromversorgungseinrichtung gemäß Anspruch 9,
dadurch gekennzeichnet,
daß in der Mitte des Gehäuses Steckplätze für die Koppelfeld-Baugruppen und beidseits davon Steckplätze für die Interface-Baugruppen angeordnet sind.

11. Stromversorgungseinrichtung gemäß Anspruch 10,
dadurch gekennzeichnet,
daß sechs Stromversorgungsanschlüsse (2) vorgesehen sind, wobei durch Auswahl von an diesen angeschlossenen externen Stromquellen die auf jeweils einer Seite des Gehäuses angeordneten Interface-Baugruppen separat
a) jeweils mit zwei verschiedenen externen Stromquellen verbindbar sind, und
b) mit nur einer externen Stromquelle, jedoch jeweils paarweise mit zwei verschiedenen externen Stromquellen verbindbar sind.

12. Stromversorgungseinrichtung nach Anspruch 11,
dadurch gekennzeichnet,
daß für jede der Koppelfeld-Baugruppen ein Anschlußkontakt vorgesehen ist, wobei die Koppelfeld-Baugruppen jeweils paarweise mit zwei verschiedenen der sechs Stromversorgungsanschlüsse (2) verbunden sind.

13. Gehäuse für mehrere Kommunikationsbaugruppen, aufweisend eine Stromversorgungseinrichtung nach einem der Ansprüche 1 bis 12.
